(19) Europäisches Patentamt
European Patent Office
Office européen des brevets

(11) Veröffentlichungsnummer: **0 026 463**
**B1**

(12) # EUROPÄISCHE PATENTSCHRIFT

(45) Veröffentlichungstag der Patentschrift: **16.02.83**

(21) Anmeldenummer: **80105765.4**

(22) Anmeldetag: **25.09.80**

(51) Int. Cl.$^3$: **D 06 P 3/54**, D 06 P 3/87, D 06 P 1/16// C09B67/22, C09B57/08, C09B57/14

(54) **Verfahren zum Färben von textilen Flächengebilden aus Polyesterfasern für die Anwendung als Warnschutzbekleidung.**

(30) Priorität: **02.10.79 DE 2939918**

(43) Veröffentlichungstag der Anmeldung: **08.04.81 Patentblatt 81/14**

(45) Bekanntmachung des Hinweises auf die Patenterteilung: **16.02.83 Patentblatt 83/07**

(84) Benannte Vertragsstaaten: **BE CH DE FR GB IT LI**

(56) Entgegenhaltungen:
**DE A 1 569 761**
**DE A 1 906 842**
**DE A 2 238 378**

(73) Patentinhaber: **HOECHST AKTIENGESELLSCHAFT**
**Postfach 80 03 20**
**D-6230 Frankfurt/Main 80 (DE)**

(72) Erfinder: **Röhser, Helmut**
**Herderstrasse 7**
**D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 026 463 B1

# Verfahren zum Färben von textilen Flächengebilden aus Polyesterfasern für die Anwendung als Warnschutzbekleidung

Die vorliegende Erfindung betrifft ein Verfahren zum Färben von textilen Flächengebilden aus Polyesterfasern oder aus Mischungen von Polyesterfasern und Baumwolle nach einem Ausziehverfahren oder Thermosolverfahren, welche zur Verwendung als Arbeitskleidung mit optischem Warneffekt entsprechend den Anforderungen nach DIN 16 954 geeignet sind.

Seit einer Reihe von Jahren wird die Arbeitskleidung für die im Außendienst eingesetzten Bediensteten der Straßenbauämter, der Bahn und von anderen im öffentlichen Dienst Beschäftigen aus beschichteten Geweben hergestellt. Diese Beschichtung enthält unter anderem auch Fluoreszenzfarben, um die Bekleidung gut sichtbar zu machen und den auf diese Weise gekennzeichneten Träger vor der Gefahr einer möglichen Schädigung durch Verkehrsunfälle zu bewahren. Eine solche Art von dem Auge auffallender Kleidung wird daher als Warnschutzbekleidung bezeichnet.

Die so beschichteten Gewebe nach DIN 16 954 und die daraus gefertigte Warnbekleidung nach DIN 30 711 weisen jedoch viele Mängel auf, so daß sie, trotz der Verpflichtung zum Tragen, vom dem dafür in Betracht kommenden Personenkreis nur unwillig und vor allem nicht regelmäßig benutzt werden.

Einer der Hauptmängel, auf den man die zuvor erwähnte Abneigung bzw. Weigerung zurückführen kann, ist die völlige Luftundurchlässigkeit der Kleidungsstücke, die durch die Beschichtung hervorgerufen wird. Das führt zu einer verminderten Hautatmung und dadurch zu Erschwernissen bei der zu verrichtenden Arbeit bis zu daraus resultierenden Hauterkrankungen (Intertrigo etc.).

Ein weiterer Nachteil der herkömmlichen Ausrüstung für diese Spezialkleidung ist die nur ungenügende Lichtechtheit der Warnfarbe in der Deckschicht. Sie beträgt, trotz des Einsatzes von Lichtwandlern in der gefärbten Deckschicht, nur 4 nach der Benotung gemäß DIN 54 004. Außerdem ändert sich der Farbton schon nach kurzer Belichtungszeit von dem vorgeschriebenen Rotorange nach der gelben Seite hin, so daß von einer roten oder rotorangen Warnfarbe dann keine Rede mehr sein kann. Das Kleidungsstück wird somit schon vor dem mechanischen Verschleiß durch diese Farbtonänderung als Warnbekleidung praktisch unbrauchbar. Aus diesem Anlaß werden die versicherungsrechtlichen Erfordernisse betreffs vorbeugender Schutz gegen Gefahrenquellen im Verkehrsablauf nicht mehr erfüllt.

Der Fachnormenausschuß « Kommunale Technik » und das Bundesamt für Materialprüfung treten heutzutage dafür ein, daß im Falle derartiger Warnschutzbekleidung die Lichtechtheit der Färbung, bei möglichster Beibehaltung der anderen das Farbverhalten bestimmenden Faktoren, auf mindestens Note 5 erhöht und daß vor allem das starke Verschießen der Nuance beim Belichten nach der gelben Seite hin behoben werden muß. Darüberhinaus sollte der Leuchtdichtefaktor $\beta$ auch bei einem unbeschichteten Gewebe nicht unter $\beta = 0,35$ liegen. Die zuletzt genannte Konzession ist deswegen notwendig, weil ein beschichtetes Gewebe aufgrund seiner glatteren Oberfläche, unabhängig von seiner Färbung, gegenüber einem nicht beschichteten Gewebe ohnehin schon einen höheren Leuchtdichtefaktor aufweist.

Der eingangs genannte Mangel der in Rede stehenden Spezialschutzbekleidung herkömmlicher Art kann ohne weitere Nachteile durch Anwendung unbeschichteter Gewebe aus Natur- oder Synthesefasern beseitigt werden. Nur war es in diesem Zusammenhang bislang nicht möglich, auf Textilgut dieser Beschaffenheit, d. h. also durch eine einfache Färbung, die verlangten Normfarbwerte und gleichzeitig den erforderlichen Leuchtdichtewert zu erreichen. Ein solches Ergebnis war bisher nur durch die Färbung per Beschichtung möglich.

Als Gewebe zum Gebrauch als Arbeitswarnkleidung spielen solche aus Polyesterfasern wegen der guten technologischen Eigenschaften dieser Fasersubstanz eine besondere Rolle.

Zweck und Aufgabe der vorliegenden Erfindung ist es, ohne Aufbringen einer Beschichtung bzw. einer gefärbten Deckschicht auf atmungsaktiven Geweben aus Polyesterfasern Färbungen zu erzeugen, die den Anforderungen der damit befaßten Behörden, insbesondere aber dem davon betroffenen Personenkreis genügen.

Diese Aufgabe wird erfindungsgemäß dadurch gelöst, daß man als Basisfarbstoffe für derartige Färbungen in den verlangten Rotorangetönen Thioindigo (2,2'-Bis-thionaphthen-indigo) und/oder Derivate der Rot- und Rosa-Reihe des 2,2'-Bis-thionaphthen-indigo (Thioindigo) in Kombination mit den Nuancierfarbstoffen der Formel I

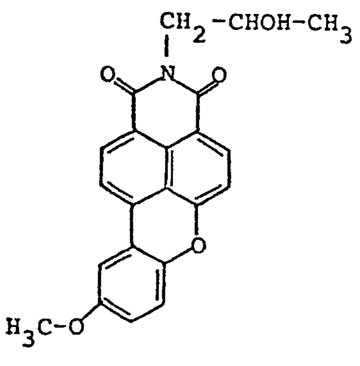

(I)

und/oder der Formel II

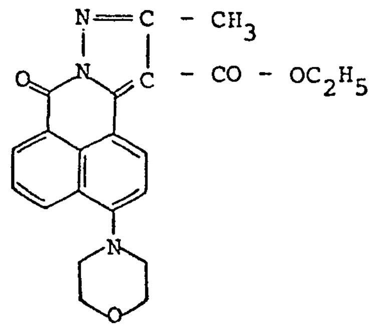

(II)

einsetzt. Ein besonderer Vorteil hierbei ist, daß man diese Farbstoffkombinationen erfindungsgemäß wie üblich in kontinuierlicher Arbeitsweise oder nach einem Ausziehverfahren unter HT-Bedingungen auf Gewebe aus Polyesterfasern oder entsprechende Polyesterfasern enthaltende Mischgewebe färben kann.

Dem Farbstoff Thioindigo (Vat Red 41 mit der C.I.-Nr. 73 300) kommt als Basis für die Färbung nach der vorliegenden Erfindung besondere Bedeutung zu, weil er einerseits die gute Lichtechtheit und gute Farbbeständigkeit bedingt, andererseits aber als einziger Farbstoff den Leuchtdichtewert β der Kombinationsfärbung weniger herabsetzt als alle anderen Rotfarbstoffe, die sonst für Polyesterfasern empfohlen werden.

Thioindigo wurde in der Praxis bislang nur als Küpenfarbstoff zum Färben von Cellulosefasern eingesetzt. Als Farbstoff für das Färben von Polyesterfasern ist er lediglich vereinzelt verwendet worden, weil es für diesen Zweck gegenwärtig preiswertere und in ihren färberischen Eigenschaften besser geeignete Rotfarbstoffe aus den Reihen der Dispersionsfarbstoff-Sortimente gibt.

Es war daher überraschend und in keiner Weise vorhersehbar gewesen, daß gerade Thioindigo in Kombination mit den Farbstoffen der Formeln I und/oder II die notwendigen Forderungen an die Qualität von Färbungen für Warenschutzbekleidung gemäß DIN 16 954 betreffend Farbort, Leuchtdichte und Lichtechtheit erfüllt.

Wie die nachfolgenden Beispiele zeigen, können Farbstoffkombinationen, die Thioindigo mit wahlweise den Farbstoffen der Formeln I und/oder II aufweisen, für die Zwecke von Warnbekleidung diskontinuierlich sowohl nach dem HT-Verfahren bei 120-140 °C auf Jet-Färbeanlagen als auch HT-Haspelkufen oder kontinuierlich nach dem Thermosolverfahren gefärbt werden.

## Beispiel 1

Ein Gewebe, hergestellt unter Verwendung von Kettgarn aus 100 % Polyesterfasern und von Schußgarn aus Polyester/Baumwolle im Mischungsverhältnis 70 : 30, wobei die rechte Seite durch die Gewebekonstruktion vom Kettgarn gebildet wird (also aus Polyesterfasern besteht), wird in einer Jet-Färbemaschine im Flottenverhältnis 1 : 30 mit einer wäßrigen Flotte gefärbt, welche

0,44 % des Farbstoffes der Formel II,
0,266 % Thioindigo mit der C.I.-Nr. 73 300 (nicht verküpt) und
0,15 $cm^3/l$ Essigsäure 60 %ig (pH 6)

aufweist. Man färbt die Ware mit diesem Bad eine Stunde bei 130 °C und reinigt die so erzeugte Färbung danach durch heißes Spülen mit Wasser und eine Behandlung mit einer wäßrigen Flotte von

2 $cm^3/l$ Natronlauge 32,5 %ig,
2 g/l Natriumdithionit und
0,5 g/l eines nichtionogenen Waschmittels

20 Minuten bei 80 °C nach. Nach dem Spülen und Trocknen des so behandelten Textilguts erhält man eine rotorange, brillante Färbung mit dem Farbort A in der weiter unten angegebenen Figur.

## Beispiel 2

Das gleiche Gewebe wie in Beispiel 1 wird nach dem Thermosolverfahren gefärbt mit einer wäßrigen Flotte, enthaltend

20 g/l Farbstoff der Formel II,
3,6 g/l Thioindigo mit der C.I.-Nr. 73 300,
1 g/l Netzmittel auf Basis aliphat. Sulfonsäuren sowie
20 g/l Verdickung auf Basis Acrylsäureamid.

Man klotzt das Textilgut bei 40 °C mit einer Flottenaufnahme von 50 % (vom Warengewicht), trocknet bei 125 °C und thermosoliert 45 Sekunden bei 210 °C. Danach wird die so erstellte Färbung mit Wasser warm gespült und wie in Beispiel 1 nachbehandelt.

Der Farbort dieser Färbung entspricht dem Punkt B in der nachfolgenden Figur.

Beispiel 3

Ein Gewebe aus 100 % Polyesterfasern wird in einer HT-Haspelkufe im Flottenverhältnis 1 : 30 gefärbt mit einem wäßrigen Bad von

0,45 % Farbstoff der Formel I
0,3 % Thioindigo mit der C.I.-Nr. 73 300 und
0,15 $cm^3$/l Essigsäure 60 %ig (pH 6)

Man färbt die Ware 45 Minuten bei 130 °C und behandelt die so erzeugte Färbung wie in Beispiel 1 nach.

Der Farbort dieser Färbung entspricht dem Punkt C der unten stehenden Figur.

Die beigefügte Abbildung stellt den Ausschnitt aus einer Norm-Farbtafel dar. Der hieraus ersichtliche abgegrenzte Bereich zeigt das durch die Vorschrift nach DIN 16 954 vorgegebene Farborttrapez, innerhalb dessen die Farborte von für Warnbekleidung zugelassenen Färbungen liegen müssen. Die Meßwerte x und y bedeuten die Koordinaten für die Normfarbwertanteile im Falle der gesuchten Farbe fluoreszierendes Orange-Rot. Die Farbe wird mit Norm-Lichtart D 65 und mit der Meßgeometrie Beleuchtung unter 45° und Beobachtung unter 0° bestimmt. Als Meßgeräte können integral messende Filter- und Spektralphotometer mit geeigneten Beleuchtungseinrichtungen benutzt werden.

Die Punkte A, B und C sind die Farborte der durch die Beispiele 1-3 erhaltenen Färbungen.

Die Leuchtdichtewerte dieser drei Färbungen betragen

$B_A = 0{,}40$
$B_B = 0{,}37$
$B_C = 0{,}38$

Die Lichtechtheit der Färbungen beträgt nach DIN 54 004 die Note 5-6. Beim Eintritt des Verschießens erfolgt dieser unerwünschte Vorgang allgemein im Farbton und nicht nach der gelben Seite hin.

**Ansprüche**

1. Verfahren zum Färben von textilen Flächengebilden aus Polyesterfasern oder aus Mischungen von Polyesterfasern und Baumwolle nach einem Ausziehverfahren oder Thermosolverfahren, vorgesehen für den Einsatz als Warnschutzbekleidung entsprechend den Anforderungen nach DIN 16 954, dadurch gekennzeichnet, daß man als Basisfarbstoff für diese Färbungen Derivate der Rot- und Rosa-Reihe des Thioindigo (2,2'-bis-thionaphten-indigo) in Kombination mit dem Farbstoff der Formel I

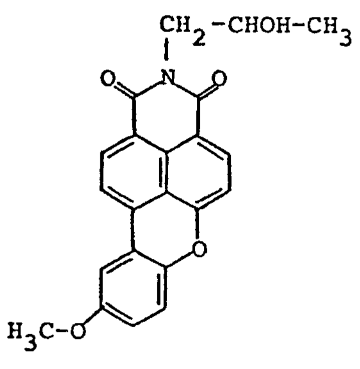

(I)

und/oder dem Farbstoff der Formel II

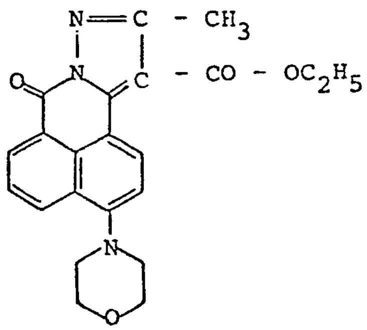

(II)

einsetzt.

2. Verfahren zum Färben von textilen Flächengebilden aus Polyesterfasern oder aus Mischungen von Polyesterfasern und Baumwolle nach einem Ausziehverfahren oder Thermosolverfahren, vorgesehen für den Einsatz als Warnschutzbekleidung entsprechend den Anforderungen nach DIN 16 954, dadurch gekennzeichnet, daß man als Basisfarbstoff für diese Färbungen den Farbstoff Vat Red 41 (Thioindigo) mit der C.I.-Nr. 73 300 in Kombination mit dem Farbstoff der Formel I

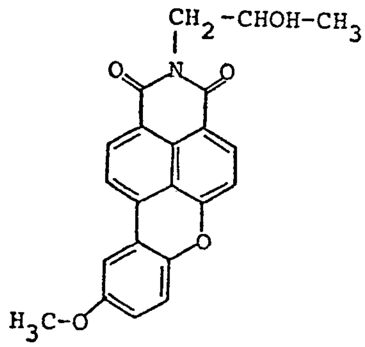

(I)

und/oder dem Farbstoff der Formel II

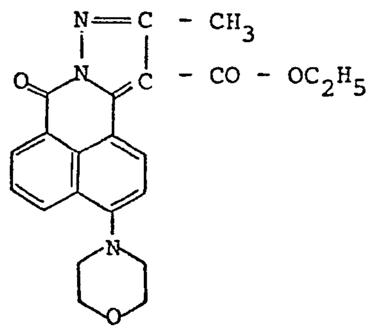

(II)

einsetzt.

**Claims**

1. A process for dyeing, by an exhaustion process or thermosol process, textile sheet-like structures which are made of polyester fibers or mixtures of polyester fibers and cotton and are intended for use as warning protective clothing in accordance with the requirements of DIN 16,954, which comprises employing, as the base dyestuff for these dyeings, derivatives of the red and pink series of thioindigo (2,2'-bis-thionaphthene-indigo) in combination with the dyestuff of the formula I

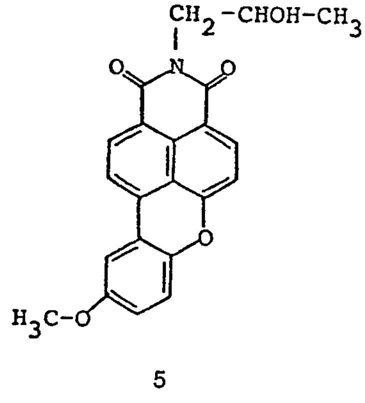

(I)

and/or the dyestuff of the formula II

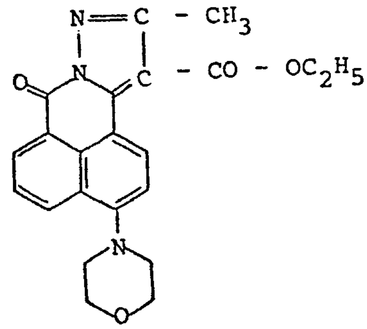

(II)

2. A process for dyeing, by an exhaustion process or thermosol process, textile sheet-like structures which are made of polyester fibers or mixtures of polyester fibers and cotton and are intended for use as warning protective clothing in accordance with the requirements of DIN 16,954, which comprises employing, as the base dyestuff for these dyeings, the dyestuff Vat Red 41 (thioindigo), C.I. No. 73,300, in combination with the dyestuff of the formula I

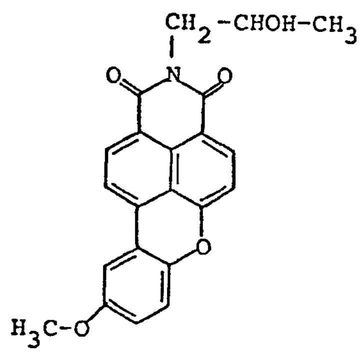

(I)

and/or the dyestuff of the formula II

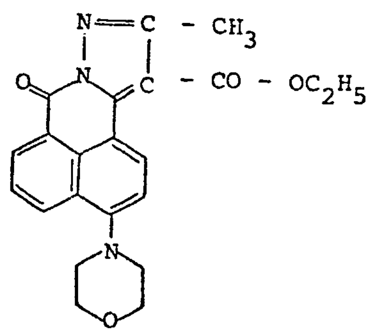

(II)

**Revendications**

1. Procédé de teinture d'articles textiles planiformes en fibres de polyesters ou en mélange de fibres de polyesters et de coton par un procédé d'épuisement ou le procédé Thermosol, en vue d'obtenir des vêtements avertisseurs de protection répondant aux exigences de la norme DIN 16 954, procédé caractérisé en ce que l'on utilise comme colorants de base pour les teintures des dérivés de la série rouge et rose du thio-indigo (2,2'-bis-thio-naphtène-indigo) associés au colorant de formule I

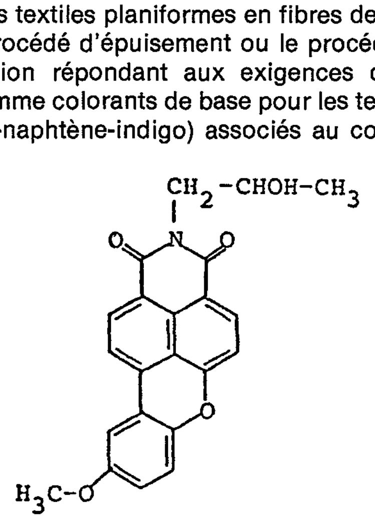

(I)

et/ou à celui de formule II

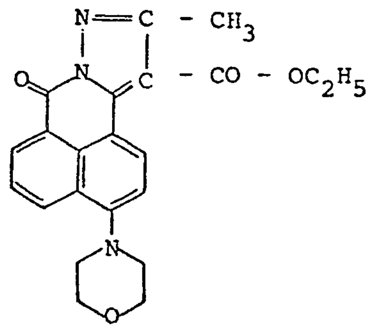

(II)

2. Procédé de teinture d'articles textiles planiformes en fibres de polyesters ou en mélange de fibres de polyesters et de coton par un procédé d'épuisement ou le procédé Thermosol, en vue d'obtenir des vêtements avertisseurs de protection répondant aux exigences de la norme DIN 16 954, procédé caractérisé en ce que l'on utilise comme colorants de base pour ces teintures le colorant Vat Red 41 (thioindigo) No. 73 300 du C.I., associé au colorant de formule I

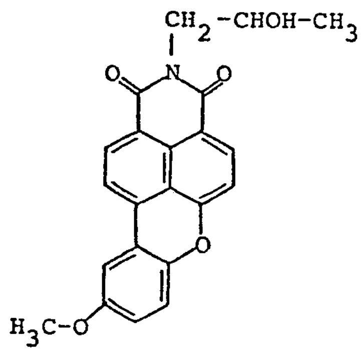

(I)

et/ou à celui de formule II

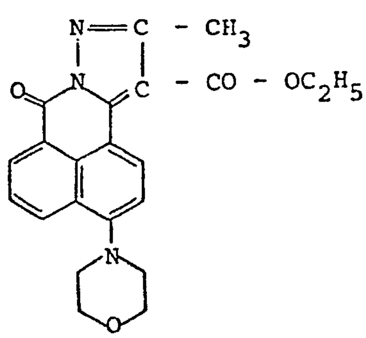

(II)

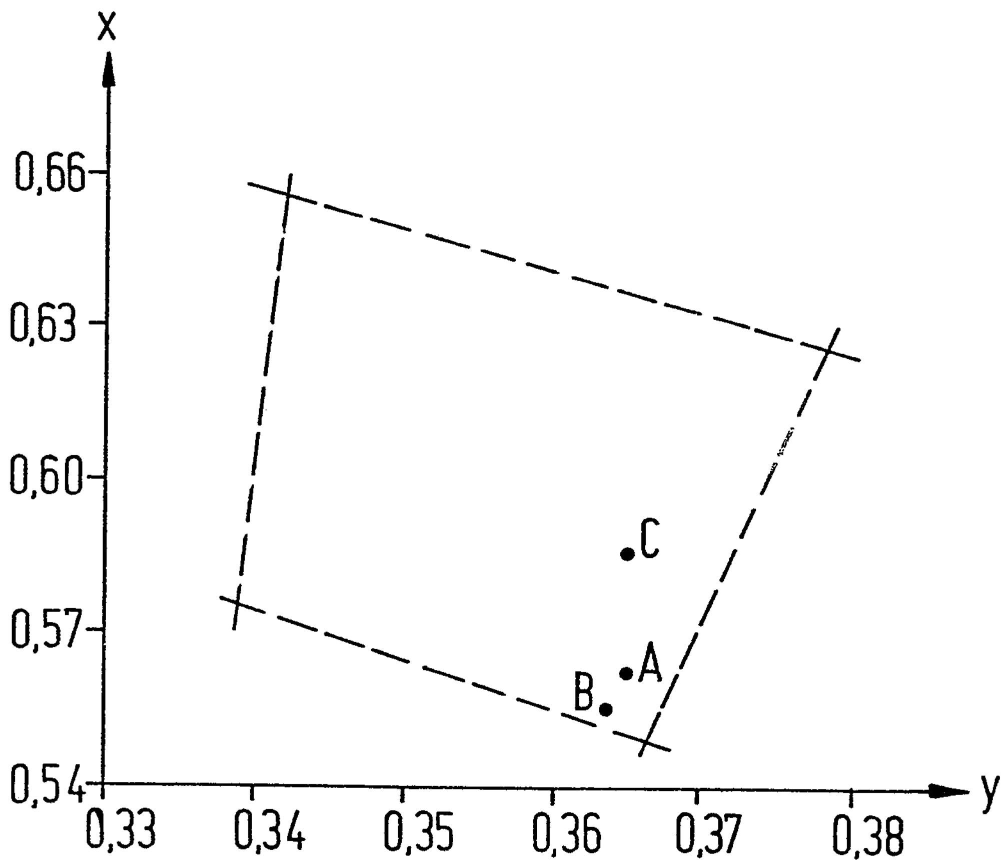
x
0,66
0,63
0,60
0,57
0,54
0,33
0,34
0,35
0,36
0,37
0,38
y
C
A
B